# EUROPEAN PATENT APPLICATION

(11) **EP 1 617 584 A2**
(43) Date of publication of application: **18.01.2006**
(21) Application number: 05011593.0
(22) Date of filing: 30.05.2005
(51) Int. Cl.: H04L 1/18, H04L 1/00

(54) **Communication device using hybrid ARQ**

(30) Priority: 13.07.2004 JP 2004205926
(71) Applicant: FUJITSU LIMITED, Kawasaki-shi, Kanagawa 211-8588 (JP)
(72) Inventor: Suzuki, Masaaki, c/o Fujitsu Limited, Kawasaki-shi, Kanagawa 211 (JP)
(74) Representative: HOFFMANN EITLE

(57) **Abstract**

A mobile station and wireless communication device avoids needless waiting for retransmissions. The mobile station utilizes H-ARQ, is compatible with HSDPA, and comprises a controller operable to release a receive-waiting status for a retransmission when a connection that exceeds a predefined amount of time is detected.

## Description

### CROSS REFERENCE TO RELATED APPLICATION

This application is related to and claims priority to Japanese Application No. 2004-205926 filed July 13, 2004 in the Japanese Patent Office, the contents of which are incorporated by reference herein.

### BACKGROUND OF THE INVENTION

### 1. Field of the Invention

The present invention relates to a communications device and a mobile station, and in particular relates to a communications device and mobile station to be used in the W-CDMA (UMTS) mobile communication system.

### 2. Description of the Related Art

Currently, the standardization of the W-CDMA (UMTS) is advancing as one of the formats of the third generation mobile communication systems, 3rd Generation Partnership Project (3GPP). In addition, the High Speed Downlink Packet Access (HSDPA) is regulated to provide a maximum downlink transmission rate of about 14 Mbps as one of the subjects of the standardization.

HSDPA utilizes an adaptive modulation and coding scheme. For example, the modulation method is switched between the QPSK modulation and 16-QAM modulation based on the wireless environment between base station and mobile station.

In addition, HSDPA utilizes the Hybrid Automatic Repeat reQuest (H-ARQ) system. In the case of H-ARQ, if the mobile station detects an error in the data received from the base station, the abovementioned mobile station transmits a request for retransmission to the base station and the base station retransmits the data. The mobile station utilizes both the already received data and the retransmitted, receiving data and performs error-correction decoding. The benefits of this is error-correction decoding is to control the number of retransmission effectively by utilizing the already received data and retransmitted data.

The main wireless channels utilized by HSDPA include: High-Speed Shared Control Channel (HS-SCCH), High-Speed Physical Downlink Shared Channel (HS-PDSCH), and High-Speed Dedicated Physical Control Channel (HS-DPCCH).

Both HS-SCCH and HS-PDSCH are shared downlink channels (in other words, in the direction from the base station to the mobile station) and HS-SCCH is the control channel to transmit the various parameters regarding transmitting data of HS-PDSCH. Examples of various parameters include, for example: information of modulation type indicating which modulation scheme is utilized for the transmission data of HS-PDSCH and information indicating number of spreading codes assigned to the transmission of the HS-PDSCH and information of rate matching processing patterns conducted in the base station.

On the other hand, HS-DPCCH is the dedicated uplink control channel from the mobile station to the base station. The HS-DPCCH is utilized when the mobile station transmits ACK and NACK signals to the base station in response to whether or not the data can be received as the data transmitted via HS-PDSCH. Furthermore, the NACK signal is transmitted from the mobile station when the mobile station fails to receive the data (when the received data has a CRC error, etc.) and the base station executes the retransmission controls.

HS-DPCCH is utilized to periodically transmit the measurement results of the receiving signal reception quality (e.g., SIR) from the mobile station as CQI (Channel Quality Indicator) to the base station. The base station determines the quality of the downlink radio environment according to the received CQI and if favorable, the modulation scheme is changed to a modulation scheme makes transmission speed higher. If the wireless environment is not favorable, the modulation scheme appropriately is changed to a modulation scheme makes the transmission speed lower.

Channel Configuration

The explanation of the HSDPA channel configuration is as follows:

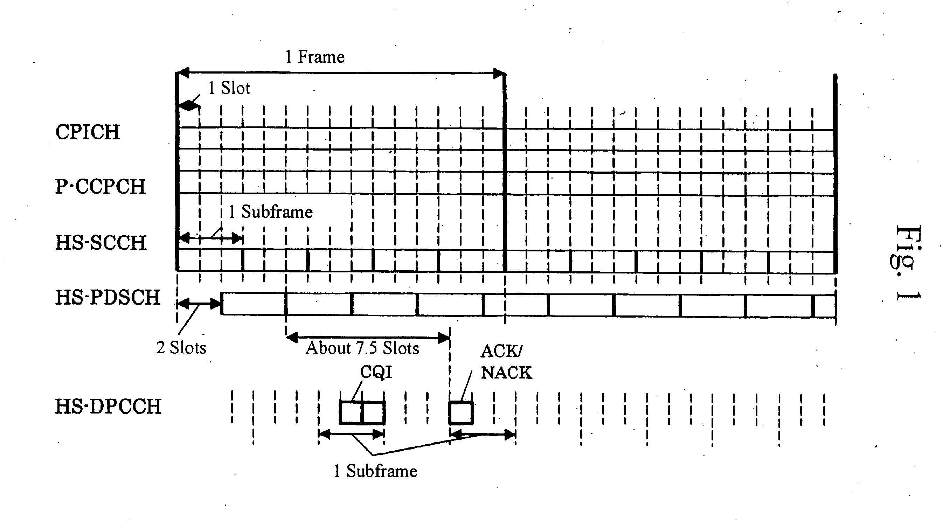

Figure 1 is a figure displaying HSDPA's channel configurations. Note that each channel is separable with codes because W-CDMA adopts code division multiple accessing scheme.

Firstly, the as yet unexplained channels will be simply explained.

CPICH (Common Pilot' Channel) and P-CCPCH (Primary Common Control Physical Channel) are common downlink channels.

CPICH is a channel utilized as the timing standard for other physical downlink channels and for channel estimations, and for cell searches by the mobile station within a cell. In other words, this is a channel to transmit pilot signals. P-CCPCH is a channel to transmit broadcast information.

Explanation of each channel's timing is as follows.

As displayed in Figure 1, each channel is configured with 15 slots for one frame (10 ms). As explained above, CPICH is utilized as the standard for other channels as the start of CPICH's frame matches with the starts of P-CCPCH and HS-SCCH's frames. The start of HS-PDSCH's frame is delayed by 2 slots when compared to HS-SCCH, etc. This is to give advance notice through HS-SCCH that modulation type and despreading code information is necessary for the mobile station to demodulate the HS-PDSCH. Accordingly, the mobile station selects the corresponding demodulation method and despreading code according to the information notified via HS-SCCH and performs the demodulation of HS-PDSCH.

In addition, three slots of HS-SCCH and HS-PDSCH configure one subframe.

The above was a simple explanation of HSDPA's channel configuration.

Next, an explanation of the data content transmitted by HS-SCCH and the encoding procedures are as follows:

Data transmitted via HS-SCCH

The following data is transmitted by HS-SCCH. Each piece of data is utilized for HS-PDSCH's receiving process, which is transmitted with a delay of 2 slots.
(1) Xccs (Channelization Code Set information)
(2) Xms (Modulation Scheme information)
(3) Xtbs (Transport Block Size information)
(4) Xhap (Hybrid ARQ Process information)
(5) Xrv (Redundancy and constellation Version)
(6) Xnd (New Data indicator)
(7) Xue (User Equipment identity)

Explanations of (1)-(7) are as follows:

Xccs (1) is configured with 7 bits of data (e.g., data indicating the combination of the number of multi-code and the code offset) indicating the spreading code(s) utilized for the transmission of the data via HS-PDSCH.

Xms (2) is configured with 1 bit of data indicating whether the modulation scheme utilized for HS-PDSCH is either QPSK or a 16-QAM.

Xtbs (3) is configured with 6 bits of data utilized to calculate the transport block size (data size transmitted at 1 subframe of HS-PDSCH) of the data transmitted by HS-PDSCH.

Xhap (4) is configured with 3 bits of data indicating the process number of H-ARQ. The base station basically cannot determine whether the mobile station has received data until the base station has received an ACK or NACK. However, if the base station waits until it has received an ACK or NACK before it transmits new data blocks, transmission efficiency decreases. By defining each of the data blocks transmitted by the subframe with a process number, this allows the transmission of new data blocks before the base station receives an ACK or NACK and the mobile station separates the receiving process according to this process number. In other words, when the base station retransmits data block, it assigns the same process number assigned to the previously transmitted block to the retransmitting data block. By correlating the transmitted blocks with their respective process numbers, they are transmitted beforehand as Xhap through HS-SCCH.

Accordingly, the mobile station separates the data received via the HS-PDSCH according to the received Xhap. Among the data flow indicated with the same process number by HS-SCCH, the new transmission and retransmissions are identified according to the hereinafter described Xnd and the new and retransmitted data are combined (H-ARQ processing, etc.).

Xrv (5) is configured with 3 bits of data indicating the redundancy version (RV) parameters (s and r) and. the constellation version parameter (b) during retransmission of HS-PDSCH. There are two procedures for Xrv: the first method (Incremental Redundancy) updates the parameters with new transmissions and retransmissions and the second method (Chase Combining) does not change the parameters with new transmissions and retransmissions.

As the first method changes the puncture pattern, the bits transmitted are changed with new transmissions and retransmissions; however, the second method causes no changes.

Xnd (6) is configured with 1 bit of data indicating whether the transmission block of HS-PDSCH is a new block or a retransmission block. For example, when transmitting a new block, 0 is changed to 1 and 1 is changed to 0, while there are no changes during retransmission and the same previous value is used.

For example, Xnd changes to 1; 1, 0, 0, 0, 1 as new transmission, retransmission, new transmission, retransmission, retransmission, new transmission are executed sequentially.

Xue (7) is configured with 16 bits of data indicating the identification information of the mobile station.

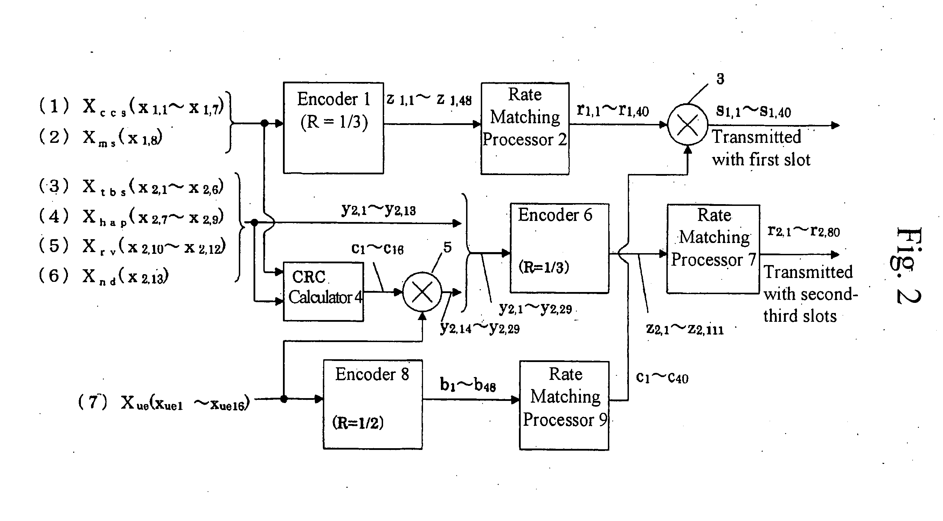

In Figure 2, 1 refers to the encoder; 2 refers to the rate matching processor; 3 refers to the multiplier; 4 refers to the CRC calculator; 5 refers to the multiplier; 6 refers to the encoder; 7 refers to the rate matching processor; 8 refers to the encoder; and 9 refers to the rate matching processor.

Explanation of each block's operation is as follows.

(1) Xccs (x1,1-x1,7) expressed with 7 bits and (2) Xms (x1,8) expressed with 1 bit for a total of 8 bits of data are input into encoder 1. The first half of the subscript number refers to the data transmitted by the first slot and the number after the comma (,) indicates the bit number.

Encoder 1 adds an 8-bit tail bit to the input data and executes a convolution coding process with an encoding rate of 1/3 for the resulting 16 bits. Accordingly, the encoded data totals 48 bits and is sent to rate matching processor 2 as z1,1-z1,48. Rate matching processor 2 executes puncture and repetition processes on designated bits, adjusts to a number of bits (here, this is 40 bits) that fit in the first slot, and outputs (r1,1-r1,40).

The data from rate matching process 2 is multiplied by multiplier 3 with c1-c40 and output as s1,1-s1,40. The data is transmitted with the first slot (part one), which is the start of 1 subframe of HS-SCCH in Figure 1.

Encoder 8 adds an 8-bit tail bit to the data from (7) Xue (Xue1-Xue16). Resulting from the convolution coding process with an encoding rate of 1/2, b1-b48 are further adjusted by rate matching processor 9 with the same bits as rate matching processor 2, resulting in c1-c40.

On the other hand, 13-bits (y2,1-2,13) including 6-bits (3) Xtbs (x2,1-x2,6), 3-bits (4) Xhap (x2,7-x2,9), 3-bits (5) Xrv (x2,10-x2,12), and 1-bit (6) Xnd (x2,13) are added with 16-bits y2,14-y2,29 and the total 29-bits (y2, 1-y2,29) are input in encoder 6.

CRC calculator 4 processes a CRC calculation of y2,14-y2,29 totaling 21 bits from (1)-(6). The calculation results are from multiplying c1-c16 with (7) Xue (Xuel-Xue16).

After an 8-bit tail bit is added to y2,1-y2,29 input into encoder 6, it is encoded with convolution coding with an encoding rate of 1/3. The data is input in rate matching processor 7 as 111-bit (x2, 1-x2, 111).

Rate matching processor 7 outputs an 80-bit (r2,1-r2,80) by the abovementioned puncture process. The r2,1- r2,80 are transmitted in the second and third slots (part two) within 1 subframe of HS-SCCH in Figure 1.

As stated above, the data of (1) and (2) are transmitted by part one and (3)-(6) are transmitted separately by part two. However, these have a commonly calculated CRC, and CRC calculation results are transmitted within the second part, as receiving errors can be detected by completely receiving the transmission of both the first and second parts.

In addition, the transmission data of the first slot is multiplied with (7) Xue by multiplier 3 after convolutional coding by encoder 1. If the mobile station receives the first slot including data addressed to a different station, the likelihood of the data is smaller than that of the data addressed to the other station, wherein the likelihood is obtained through the decoding process of the data. Therefore, comparison result of this likelihood and reference value indicates whether the data is addressed to the mobile station or addressed to the other station.

Encoding data transmitted via HS-PDSCH

Utilizing the block figure, explanation of the data transmission process of HS-PDSCH is as follows.

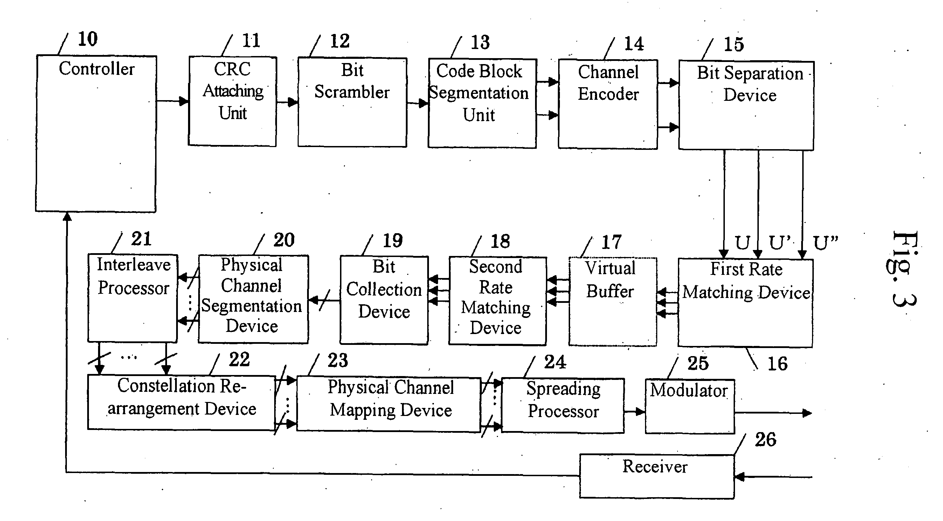

Figure 3 is the figure displaying the transmission device according to this invention.

Furthermore, the transmission device (radio base station) of the W-CDMA communication system compatible with the previously explained HSDPA is explained as an example. Other communication system is also utilized instead of the WCDMA communication system.

In the figure, controller 10 outputs the transmission data (data transmitted within 1 subframe) transmitted via HS-PDSCH in order and is the controller that controls each section (11-26, etc.): Each value of (1)-(7) explained in Figure 2 is produced by this controller 10.

Furthermore, as HS-PDSCH is a shared channel, the transmission data output in order is permitted to be addressed to different mobile stations.

CRC attaching unit 11 executes CRC calculations on the transmission data input in order (data transmitted within the same wireless frame) and adds the CRC calculation results as a CRC attachment to the tail end of the this transmission data. Bit scrambler 12 scrambles the bit units of the transmission data which is added CRC calculation results and is the bit scrambler that randomizes the transmission data.

Code Block Segmentation 13 is a code block segmentation device which divides (e.g., into two equal parts) the transmission data when the scrambled transmission data exceeds a predetermined data length to avoid increasing the calculations of the decoder on the receiving side, wherein the increasing of the calculations are caused by increasing of length of the encoded data output from channel encoder 14. In the figure, the input data exceeds the predetermined data length and the output is divided into two equal parts (divided into the first and second data blocks). Needless to say that examples of divisions other than two can be produced, and there are also examples of data with different lengths.

Channel encoder 14 is a channel encoding device that separately executes error-correcting coding for the various divided data. Furthermore, a turbo encoder is utilized as channel encoder 14.

Accordingly, the first output for the first block includes: the important systematic bit (U), which is the same data as the encoding target data; the first redundant bit (U'), resulting from the convolutional coding of the system bit (U); and the second redundant bit (U"), resulting from the same convolutional coding after the systematic bit is interleaved. Similarly, the second output includes: the systematic bit (U), the first redundant bit (U'), and the second redundant bit (U").

Bit Separation Device 15 is a bit separation device input the first and second blocks output by channel encoder 14 (turbo encoder) serially and the device separates these block respectively and outputs the systematic bit (U), the first redundant bit (U'), and the second redundant bit (U").

First Rate Matching Device 16 is a first rate matching device that executes the rate matching process (for example the puncture process (thinning out) etc.) on the input data (all of the data in the divided blocks when the data is divided into several blocks) to make it fit into the predetermined area of the subsequent virtual buffer 17.

Virtual buffer 17 is a virtual buffer storing the data processed by the first rate matching device 16 in the area established, in response to the receiving processing capacity of the transmission targeted mobile station, by controller 10. By using the stored data in the virtual buffer for retransmission, the process from the CRC attaching unit 11 to the first rate matching device 16 is omitted. However, if the encoding rate changes during retransmission, it is preferable to output transmission data from the memory of controller 10 again, rather than use the data stored in the virtual buffer 17.

Furthermore, an actual buffer does not have to be established as the virtual buffer 17 and can pass data directly through. In this case, the retransmitted data is output again from controller 10.

Second Rate Matching Device 18 is a second rate matching device that adjusts input data to a length storable in a subframe specified by the controller 10, wherein the Second Rate Matching Device 18 executes the puncture (thinning out) and repetition processes (repeating) to adjust the input data to the length specified by the controller 10.

Note that this second rate matching device 18 executes the rate matching process in response to the previously explained RV parameters.

In other words, if s = 1 in the RV parameter, the rate matching process leaves most of the systematic bits, and if s = 0, the systematic bits decrease and most of the redundant bits are permitted to remain. In addition the puncture and rate matching processes are executed by pattern according to r.

Bit Collection Device 19 is a bit collection device that arranges the data from second rate matching device 18 to form multiple bit sequences. In other words, by arranging the data of the first and second blocks by the predetermined bit arranging method, multiple bit sequences are output indicating the signal points on the various phase planes. Furthermore, in this example of embodiment, the bit sequence is configured from 4 bits to utilize the 16-bit QAM modulation method; however, the bit sequence may be configured to 6 bits to utilize the 64-bit QAM modulation method and the bit sequence may be configured to 2 bits to utilize the QPSK modulation method.

Physical Channel Segmentation Device 20 distributes the bit sequences to the N systems, wherein N equals to number of spreading codes used for transmission of the subframe and is indicated by controller 10. In other words, if the number of codes as the transmission parameter indicated by controller 10 is N, device 20 distributes the bit sequences into the I-N system in the input order of the bit sequences.

Interleave Processor 21 is an interleaving device that interleaves input bit sequences of each system and outputs interleaved bit sequences for 1-N system.

Constellation Re-arrangement Device 22 performs constellation rearrangement (constellation re-arrangement for 16 QAM) for input bit sequences, wherein the rearrangement is conducted within each bit sequence. Bits are rearranged according to the previously explained constellation version. For example, the bit sequences are rearranged by interchanging the upper and lower bits and it is preferred that the bits are interchanged with the same rules for multiple bit sequences.

Physical Channel Mapping Device 23 distributes bit sequences of N systems into corresponding spreading process parts included in the subsequent spreading processor 24.

Spreading Processor 24 includes spreading process parts. In spreading process part, voltage values of I and Q are output according to each input bit sequence and these voltage values are spread by spreading code assigned to the spreading process part and output as spread signal.

Modulator 25 is a modulation device that combines the various signals spread by spreading processor 24 and execute amplitude phase modulation (for example the 16-bit QAM modulation) based on the combined signal and amplifies modulated signal by the variable gain amplifier. Furthermore, after the frequency is converted to a radio signal, the signal is output to the antenna as the radio signal for transmission from base staition.

Furthermore, as HSDPA can multiply the signals addressed to other mobile stations using spreading codes in a subframe. Accordingly it is preferred that sets of 10-25 and a variable gain amplifier multiple, wherein this sets shall be called transmission sets, are provided and output signals of the variable gain amplifiers are transmitted after combining and frequency conversion commonly. Needless to say, they should be separated by codes and variously separable different spreading codes are utilized in the spreading processor 24 for each of the transmission sets.

Receiver 26 receives signals from the mobile station via HS-DPCCH. The CQI, ACK and NACK signals received via HS-DPCCH are sent to controller 10.

As stated above, once the ACK signal is received, the next new data is transmitted. However, if the NACK signal is received or if there is no response within the predetermined amount of time, the retransmission control of controller 10 is executed to retransmit the transmission data. Furthermore, if retransmission is restricted to the established maximum number of retransmissions and the ACK signal is not received from the mobile station even after the maximum number of retransmissions is reached, the controller 10 switches to transmit the next new data.

Furthermore, if the maximum number of retransmissions is not defined, the timer is started from the new transmission. If the ACK signal is not detected as received even after the predetermined time has elapsed, the device can switch to transmit the next new data.

The above explained the names of the various parts and their operation.

As stated above, the items related to HSDPA are disclosed in 3rd Generation Partnership Project: Technical Specification Group Radio Access Network; Multiplexing and channel coding (FDD) (3G TS 25.212) and in 3rd Generation Partnership Project: Technical Specification Group Radio Access Network; Physical layer procedures (FDD) (3G TS 25.214)

According to the previously explained technological background, the receiving device can judge whether the transmission is new transmission or retransmission by identifying the data (Xnd) indicating new transmission or retransmission. However, receiving this data (Xnd) can be damaging.

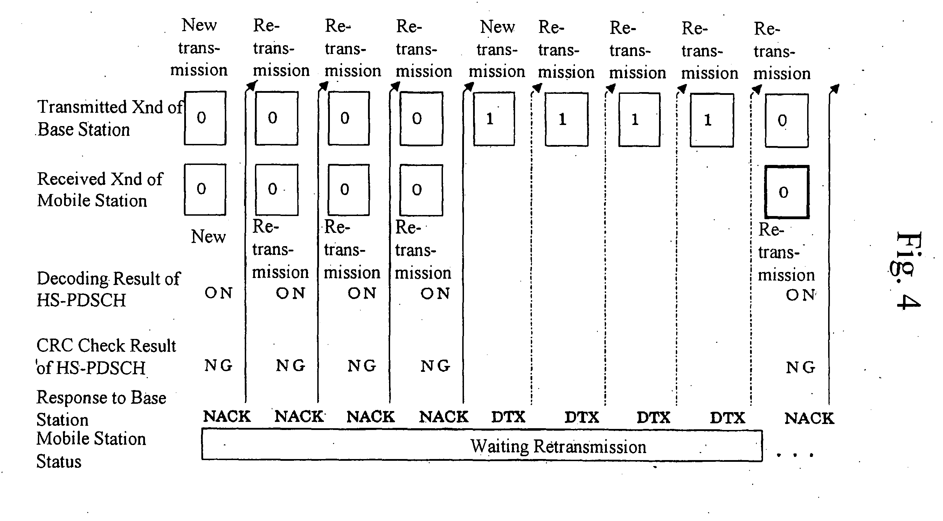

For example, if the base station, as displayed in Figure 4, transmits Xnd sequentially like 0,0,0,0,1,1,1,1,0, the mobile station can receive the HS-SCCH of the 1,1,1,1 part under the phasing environment. Accordingly the mobile station can erroneously receive "1,1,1,1" (this erroneous receive includes CRC error of HS-SCCH or impossibility of HS-SCCH receiving). Usually the mobile station does not know the maximum number of retransmissions, therefore, the mobile station anticipates the retransmission until 1 is detected as Xnd. In other words the mobile station keeps retransmission waiting status until 1 is detected as Xnd. If the next transmission is not planed, the mobile station keeps retransmission waiting status and unnecessary data areas continue to be reserved in the memory to combine with data which will be not transmitted from the base station. In addition, as long as received Xnd continues to be 0, the mobile station judges that all data received through HS-PDSCH is retransmitted and all data is subject to combination. As a result, the combinations of different data may lead to the destruction of data.

Accordingly, a need arises to avoid the needless waiting for retransmissions as much as possible.

### SUMMARY OF THE INVENTION

Not restricted to the abovementioned purpose, one of the purposes of this invention is to attain results not available with conventional technology. These results were attained from the various configurations indicated as the best to implement the hereinafter described invention.

A mobile station and wireless communication device according to the present invention, avoids needless waiting for retransmissions.

According to one embodiment of the present invention, a mobile station utilizing H-ARQ and compatible with HSDPA comprises a controller operable to release a receive-waiting status for a retransmission when the mobile station detects that a period in which the mobile station keeps the receive-waiting status for retransmission exceeds a predefined amount of time. The release of the receive-waiting status means that the mobile station treats next reception of HS-SCCH addressed to the mobile station as a notification of new data transmission via HS-PDSCH. The mobile station further comprises a memory operable to store received data to combine with retransmitted data and wherein the controller controls the permission to erase or to overwrite a memory space storing the received data in the memory as the release. The detection is conducted by detecting the lapse of a predetermined amount of time after a number has bee omitted from the received data blocks, and, when the lapse of the predefined amount of time is detected, the controller sends corresponding received data blocks to the processor of an upper layer processor.

According to one embodiment of the present invention, a mobile station utilizing H-ARQ and compatible with HSDPA, comprises an HS-SCCH receiver to receive a new data indicator, Xnd, and H-ARQ process information, Xhap, an HS-PDSCH receiver, and a controller operable to divide data blocks received via HS-PDSCH into multiple groups based on Xhap, determine whether a received transmission is a new transmission or a retransmission based on Xnd within each divided group, perform reordering based on sequential information included in the data blocks, start a timer when an omission is detected among the received data blocks, and send the data blocks to a processor of an RLC layer, if the timer times out without filling the omission. The controller is further operable to release from a status of waiting for retransmission groups that are in waiting status for retransmission among the multiple groups.

According to one embodiment of the present invention, a radio communications device deciding whether to combine data blocks that are being received with data blocks that have been already received, based on an indication of either newly transmitted data or retransmission data, the device comprising a detector detecting that a period in which the radio communication device keeps the receive-waiting status for retransmission exceeds a predefined amount of time, and a controller handling a next received data block as new data, regardless of the indication of either newly transmitted data or retransmission data.

According to one embodiment of the present invention, a radio communications device deciding whether to combine data blocks that are being received with data blocks that have been already received, based on an indication of either newly transmitted data or retransmission data, the radio communication device comprising a memory to store received data for combine with retransmission data, and a control device to control a permission to erase the data blocks that have been stored in the memory or to overwrite memory space of the data blocks that have been stored in the memory, if a period in which the radio communication device keeps the receive-waiting status for retransmission exceeds a predefined amount of time.

### BRIEF DESCRIPTION OF THE DRAWINGS

Figure 1 shows the channel configuration of HSDPA.

Figure 2 shows the encoder of HS-SCCH.

Figure 3 shows the transmission device (base station).

Figure 4 shows one generated example of waiting status for retransmission.

Figure 5 shows the communication device (mobile station) of this invention.

Figure 6 shows the HS-PDSCH receiving processor.

Figure 7 shows the controller process flow of this invention.

Figure 8 shows the communication between the radio base station and the mobile station and the reordering process.

### DETAILED DESCRIPTION OF THE PREFERRED EMBODIMENTS

Referring to the figures, explanations of preferred embodiments of the invention are as follows:

Explanation of Preferred Embodiment 1

As previously explained, a waiting status for retransmission is generated as displayed in Figure 4. However in this embodiment, if a predefined amount of time lapses in this state, the waiting status for retransmission is released.

Furthermore, the transmission device of the W-CDMA (UMTS) communication system compatible with the previously explained HSDPA is explained as an example. The other transmission systems can also be utilized instead of W-CDMA communication system.

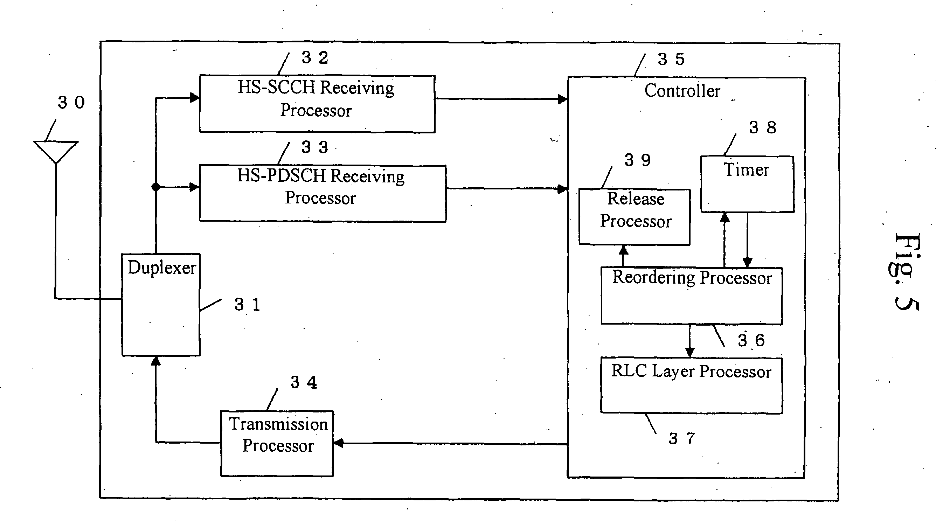

In Figure 5, 30 refers to the antenna; 31 refers to the duplexer that allows sharing of antenna 30 for transmission and receiving; 32 refers to the HS-SCCH receiving processor; 33 refers to the HS-PDSCH receiving processor; 34 refers to the transmission processor transmitting HS-DPCCH etc.; and 35 refers to the controller controlling the various parts. Functions of controller 35 include 36-39; 36 refers to the reordering processor that reorders the received data blocks; 37 refers to the RLC layer processor that processes the data blocks after reordering; 38 refers to the timer; and 39 refers to the release processor that releases the waiting status for retransmission.

Explanations of the radio communication device's (mobile station's) operation as displayed in Figure 5 are as follows.

As previously explained using Figures 1-4, the signal transmitted from the radio base station in Figure 3 is received by antenna 30 of the mobile station.

The signal received by antenna 30 is input in HS-SCCH receiving processor 32 and HS-PDSCH receiving processor 33. Furthermore, the mobile station includes the receiving processor to receive other channels; however, the explanation here will be shortened.

HS-SCCH receiving processor 32 receives the previously explained HS-SCCH and detects whether the data is transmitted to the radio communication device (mobile station) by executing the decoding process (for example Viterbi decoding).

If a transmission addressed to the radio communication device is detected, the information of Xccs and Xms included in the first part of HS-SCCH, necessary for the receiving process of the 2 slot delayed HS-PDSCH, is sent to controller 35.

Controller 35 establishes the parameters for demodulation and despreading processes for HS-PDSCH receiving processor 33, based on the information provided by Xccs and Xms.

. In other words, the set of the despreading code(s) notified by Xccs is transmitted to HS-PDSCH receiving processor 33 and the demodulation (despreading) process is executed in response to the modulation format (QPSK, 16-bit QAM) notified by Xms.

In addition, HS-SCCH executes the demodulation process on the second part, extracts Xtbs, Xhap, Xrv, and Xnd information etc., and transmits it to the HS-PDSCH receiving processor 33.

The HS-PDSCH receiving processor 33 executes the demodulation process according to the information included in second part.

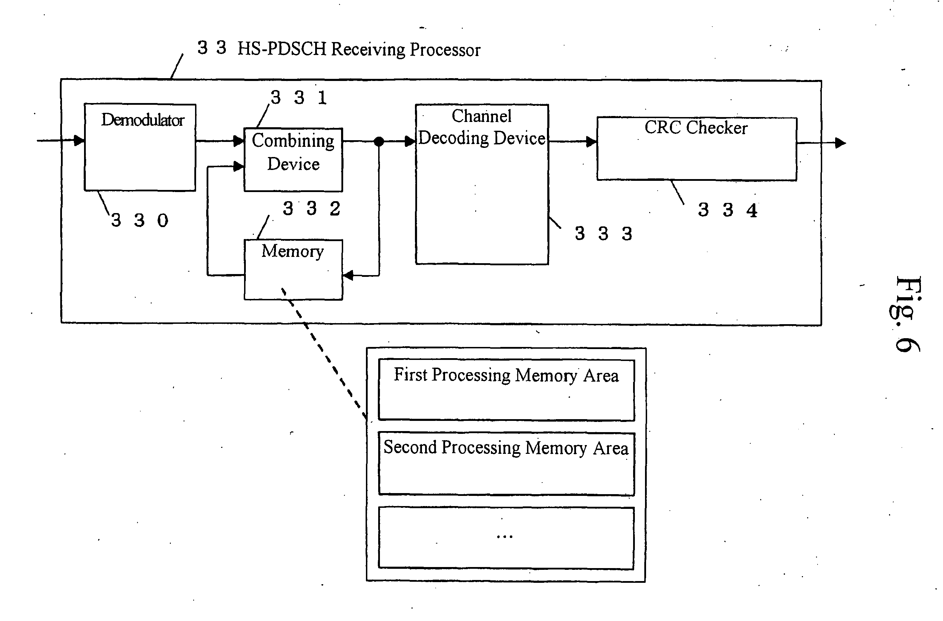

As displayed in Figure 6, HS-PDSCH receiving processor 33 has a demodulator 330, a combining device 331, memory 332, a channel decoding device 333, and a CRC checker 334.

As stated above, demodulator 330 executes the demodulation process including the despreading process according to the information indicated by the first part of HS-SCCH. In addition, the unillustrated de-rate matching processor, based on the Xrv indicated by the second part of HS-SCCH, executes the reverse process to the rate matching process executed by the radio base station.

In addition, if a new transmission is detected by Xnd, combining device 331 does not execute the combining process and directly passes the input received data. This data is then output to the channel decoding device 333 and memory 332.

On the other hand, if retransmission is detected by Xnd, the received data stored in memory 332 and the data currently being received are combined by the combining device 331. This combined data is then output to the channel decoding device 333 and memory 332.

These are processes based on the H-ARQ processes. An example of combination includes the averaging of the likelihood information of the receiving signal utilized in the channel decoding device 333 and the reciprocal compensating process for missing data utilized in decoding.

Note that memory 332 needs to execute combinations separately for each process notified by Xhap, a different memory area is reserved for each process. In other words, if the first process is notified by Xhap that the receiving data is recorded to the memory area for the first process, and if the second process is notified by Xhap, then the receiving data is recorded to the memory area for the second process.

Data passing through or combined in the combining device 331 1 is processed by de-rate matching in response to the rate matching process executed by the radio base station in the unillustrated de-rate matching processor and output to the channel decoding device 333.

Channel decoding device 333 executes the decoding process (e.g., turbo decoding process) in response to the encoding process (e.g., channel encoding process of turbo encoding) executed by the radio base station.

The data obtained by decoding (decoded data) is input to CRC checker 334 and any CRC error is detected utilizing the CRC bits included in the receiving signal. The CRC check results are added to the decoded data and output to controller 35.

Returning to the explanation of Figure 5, controller 35 receives the decoded data of HS-ODSCH and CRC check results of that decoded data from HS-PDSCH receiving processor 33. If there is a CRC error, the controller 35 generates a NACK signal and if there is no CRC error, the controller generates an ACK signal and sent ACK (NACK) signal to the transmission processor 34. Transmission processor 34 transmits these signals from the corresponding slot displayed in Figure 1.

Furthermore, if there is no CRC error, controller 35 releases (e.g., permission to erase or to overwrite with other data) the corresponding area of memory 332, wherein the corresponding area is specified by the process number. If there is a CRC error, controller 35 does not release the corresponding area of memory 332 and leaves the data recorded, wherein the corresponding area is specified by the process number. In other words, the waiting status for retransmission is set.

In addition, controller 35 measures (e.g., measurements of SIR) the receiving environment of CPICH with the unillustrated receiving processor. The controller 35 generates CQI information in response to the measurement results and sent to the transmission processor 34. Transmission processor 33 periodically transmits the CQI information using the slot displayed in Figure 1. Based on this CQI information, the base station executes the appropriate controls to increase the speed of transmission, if the receiving environment is favorable, and executes the appropriate controls to decrease the speed of transmission, if the receiving environment is not favorable, as previously explained.

Furthermore, controller 35 operates the reordering processor 36 to reorder the receiving data blocks according to the TSN (transport sequence number) sequential information included in the decoded data output from HS-PDSCH receiving processor 33.

The base station transmits the various data blocks via HS-PDSCH after attaching the TSN (during retransmission, the TSN during initial transmission utilizes the same TSN) to each data block in order and the mobile station basically receives the data block in the order of TSN.

However, the base station may partially reverse the TSN receiving order for transmitting new data after attaching incremented TSN when the maximum number of retransmissions is exceeded or for retransmitting data in one hand and transmitting new data in the other hand in parallel under the condition of defing process number for each data.

Reordering processor 36 executes a reordering of decoded data based on : the TSN included in the various receiving data blocks.

If the decoded data is in order, the data is sent to RLC layer processor 37, a higher layer; however, if there is an omission in the order, timer 38 is started as the means for measuring time and the decoded data is not sent to RLC layer processor 37.

If a time out signal is sent to the reordering processor 36, indicating the lapse of the predefined amount of time by timer 38, reordering processor 36 sends the decoded data to RLC layer processor 37.

Because there is a omitted data block whose TSN is omitted number and it is impossible to anticipate receiving the data block from the base station under the retransmission control of H-ARQ. Accordingly the controller 35 entrusts the retransmission process to the RLC layer, the upper layer.

In this example of embodiment the timer is utilized to detect that a period in which the mobile station keeps the receive-waiting status for retransmission exceeds a predefined amount of time.

Because the timer is used for detecting the resignation taming when reordering processor 36, as a MAC-hs layer process, judges that the retransmission will not be conducted by the base station under H-ARQ, the timeout of this timer is thought to be ideal as the standard determining the necessity to maintain (keep) the waiting status for retransmission.

Accordingly, release processor 39 of controller 35 executes the release process of the waiting status for retransmission according to the timeout notification from timer 38.

As an example of the release process, the recording area of the data (data corresponding to the process number) in memory 332 is released (e.g., permission to erase or to overwrite with other data).

In addition, as an example of the release process, if the same process number as the process number corresponding to the memory area set for the waiting status for retransmission in memory 332 is notified by HS-SCCH, a new transmission is determined even if a new transmission is not detected (when a retransmission is detected) in addition to when a new transmission is detected by Xnd. Needless to say, combining device 331 does not combine in this case, directly passing the data through, and the data recorded in memory 332 is not combined. The data currently being received is then recorded again to memory 332.

In this example of embodiment as stated above, when a period in which the mobile station keeps the receive-waiting status for retransmission exceeds a predefined amount of time, the adverse effects of the needless keep of the waiting status for retransmission can be reduced with the controller that performs release of the waiting status for retransmission.

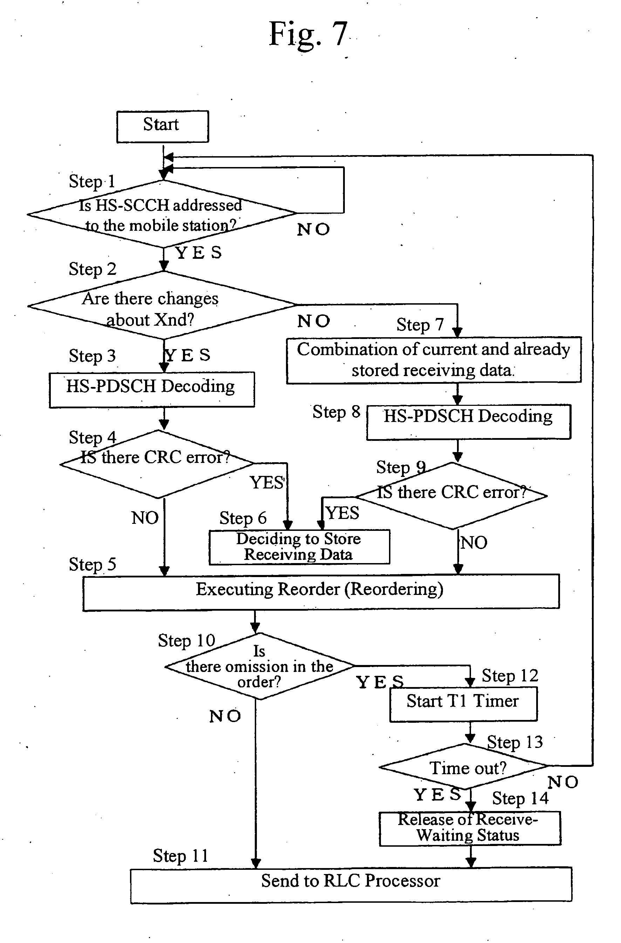

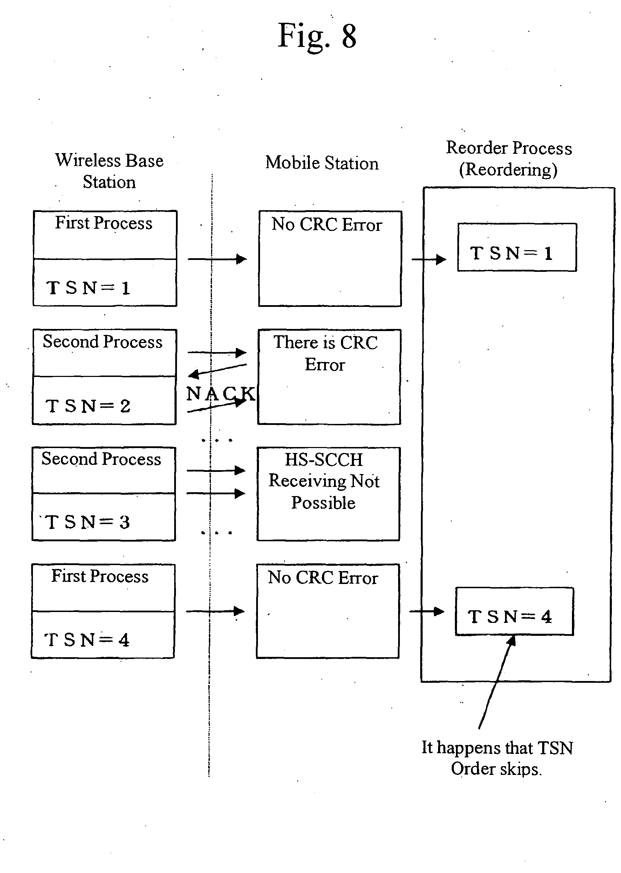

Figures 7 and 8 are utilized to further simply explain the operation of this example of embodiment.

Figure 7 displays the control process flow of controller 35, and Figure 8 displays the communication between the radio base station and the mobile station and the reordering process.

In Figure 7, the mobile station receives every subframe HS-SCCH and determines whether HS-SCCH is addressed to the mobile station (Step 1).

If no, the next subframe of HS-SCCH is received.

If yes, whether changes to Xnd have occurred is determined (Step 2).

If there are changes (Xnd: the change where it was 0 and is now 1 or was 1 and is now 0), this is advance notice that new data blocks are transmitted via HS-PDSCH. Advance to Step 3, the process of receiving the new data.

On the other hand, if there are no changes, advance to Step 7, the process of receiving retransmitted data.

If advancing to Step 3 when receiving new data, the controller controls the HS-PDSCH receiving processor 33 to receive and to decode HS-PDSCH.

The CRC check of Step 4 checks whether there is error in the decoded results or not. If there is no error, advance to the reordering process by reordering processor 36, as shown in Step 5. On the other hand, if there is error, store the received data in memory 332, as shown in Step 6. In other words, set the waiting status for retransmission.

In Step 2, if no changes are detected in Xnd (if retransmission is detected), advance to Step 7 and combine the data currently being received and the data recorded to memory 332 (combine the data having common process number).

Execute the decoding process of HS-PDSCH after combining in Step 8 and check for any CRC errors in Step 9.

If there are no errors, advance to Step 5. If there are errors, advance to Step 6 and store the combined data to memory 332.

In Step 5, execute the reordering process utilizing TSN, the sequential information of the receiving data, and determine whether there are any omissions in the order of TSN in Step 10.

If no, the decoded data is sent to RLC layer, the upper layer.

On the other hand, if yes, start T 1 timer (Step 12) and advance to Step 13. Furthermore, if T 1 timer has already started, advance to Step 13.

In Step 13, determine whether the predetermined time on the T 1 timer has elapsed (whether the timer has timed out). If no, do not release the receive-waiting status and return to the process in Step 1 (receive the next subframe).

On the other hand, if yes, release the receive-waiting status (Step 14) and send the received data with TSN omission to the RLC layer (Step 11).

Furthermore, the releasing process is as previously explained. The decision in Step 2 is the process of forcefully deciding on yes.

Finally, Figure 8 displays the communication between the radio base station and the mobile station. Simple explanations of TSN order skipping examples are as follows.

In the figure, the radio base station notifies the first process by Xhap and transmits new data as TSN = 1.

The mobile station does not detect a CRC error regarding the decoded results of HS-PDSCH and sends the data to reordering processor 36.

Next, parallel with the first process (TSN = 1) or after the first process (TSN = 1), the radio base station notifies the second process by Xhap and transmits new data as TSN = 2.

If a CRC error is detected in the decoded results of HD-PDSCH, the retransmission control is executed by H-ARQ. In other words, the NACK signal is transmitted from the mobile station and the base station receives the NACK signal and retransmits for the second process (TSN =2).

However, if the receiving environment is bad and the ACK signal from the mobile station is not received by the radio base station even after exceeding the' maximum number of retransmissions, the radio base station notifies the mobile station vai HS-SCCH regarding the transmission of the next new data for the second process with TSN = 3.

However, if the mobile station cannot receive HS-SCCH due to phasing, the mobile station does not detect the changes of Xnd.

During and after this time, the radio base station notifies the mobile station through HS-SCCH regarding the transmission of the next new data for the first process with TSN = 4. The mobile station detects this and receives HS-PDSCH. If the CRC check results in no error, the data is sent to reordering processor 36 and reordering processor 36 detects TSN = 4.

If reordering processor 36 detects a skip from TSN = 1 to TSN = 4, it starts the T1 timer.

Especially in this example, if there are no further transmissions for the second process, the waiting status for retransmission of the second process is maintained until the release process is executed by the timeout of the T1 timer. In addition, even if there are further transmissions by the second process, the switch to the new transmission about HS-SCCH was not detected once. Therefore, the switch to the next new transmission will be detected as a retransmission and it is clear that the T1 timer may timeout.

Although specific embodiments of the present invention have been described, it will be understood by those. of skill in the art that there are other embodiments that are equivalent to the described embodiments. Accordingly, it is to be understood that the invention is not to be limited by the specific illustrated embodiments, but only by the scope of the appended claims.

## Claims

1. A mobile station utilizing H-ARQ and compatible with HSDPA comprising:
a controller operable to release a receive-waiting status for a retransmission when the mobile station detects that a period in which the mobile station keeps the receive-waiting status for retransmission exceeds a predetermined amount of time.

2. The mobile station of Claim 1, wherein the release of the receive-waiting status means that the mobile station treats next reception of HS-SCCH addressed to the mobile station as a notification of new data transmission via HS-PDSCH.

3. The mobile station of Claim 1, further comprising a memory operable to store received data to combine with retransmitted data and wherein the controller controls the permission to erase or to overwrite a memory space storing the received data in the memory as the release.

4. The mobile station of Claim 1, wherein the detection is conducted by detecting the lapse of predetermined amount of time after a number has been omitted from the received data blocks, and, when the lapse of the predefined amount of time is detected, the controller sends corresponding received data blocks to the processor of an upper layer.

5. A mobile station utilizing H-ARQ and compatible with HSDPA, comprising:
an HS-SCCH receiver to receive a new data indicator, Xnd, and H-ARQ process information, Xhap;
an HS-PDSCH receiver; and
a controller to:
divide data blocks received via HS-PDSCH into multiple groups based on Xhap,
determine whether a received transmission is a new transmission or a retransmission based on Xnd within each divided group,
perform reordering based on sequential information included in the data blocks,
start a timer when an omission is detected among the received data blocks, and
send the data blocks to a processor of an RLC layer, if the timer times out without filling the omission.

6. The mobile station of claim 5, wherein the controller is further operable to release, from a status of waiting for retransmission, groups that are in waiting status for retransmission among the multiple groups.

7. A radio communications device deciding whether to combine data clocks that are being received with data blocks that have been already received, based on an indication of either newly transmitted data or retransmitted data, the radio communication device comprising;
a detector detecting that a period in which the radio communication device keeps the receive-waiting status for retransmission exceeds a predefined amount of time, and
a controller handling a next received data block as new data, regardless of the indication of either newly transmitted data or retransmission data.

8. A radio communications device deciding whether to combine data clocks that are being received with data blocks that have been already received, based on an indication of either newly transmitted data or retransmitted data, the radio communication device comprising;
a memory to store received data for combine with retransmission data; and
a control device operable to control a permission to erase the data blocks that have been stored in the memory or to overwrite memory space of the data blocks that have been stored in the memory, if a period in which the radio communication device keeps the receive-waiting status for retransmission exceeds a predefined amount of time.
